# EUROPÄISCHE PATENTSCHRIFT

(11) **EP 2 243 954 B1**
(45) Veröffentlichungstag und Bekanntmachung des Hinweises auf die Patenterteilung: **14.03.2018**
(21) Anmeldenummer: 09014891.7
(22) Anmeldetag: 01.12.2009
(51) Int. Cl.: F03D 80/00, F03D 13/10, B66C 1/44, B66C 23/04, B66C 23/18, B66C 23/66

(54) **Manipulator zur Montage von Rotorblättern einer Windkraftanlage**
Manipulator for fitting rotor blades of a wind power system
Manipulateur destiné au montage de pales de rotor d'une éolienne

(30) Priorität: 15.12.2008 DE 202008016578 U
(43) Veröffentlichungstag der Anmeldung: 27.10.2010
(73) Patentinhaber: Liebherr-Werk Ehingen GmbH, 89584 Ehingen/Donau (DE)
(72) Erfinder: Willim, Hans-Dieter, Dipl.-Ing., 89079 Ulm-Unterweiler (DE)
(74) Vertreter: Laufhütte, Dieter

(56) Entgegenhaltungen:
- EP-A1- 0 940 366
- EP-A1- 1 925 582
- WO-A1-03/100249
- DE-U1-202006 015 189
- US-A- 4 280 785
- US-A- 4 784 565
- US-A- 5 865 492

## Beschreibung

Die vorliegende Erfindung betrifft eine Montageeinrichtung zur Montage von Rotorblättern einer Windkraftanlage. Bei der Montage von Windkraftanlagen sind die Rotorblätter bzw. Flügel des Windrades an der Nabe in großer Höhe zu montieren. Auch zu Reparatur- und Wartungszwecken kenn eine Demontage bzw. erneute Montage der Rotorblätter notwendig werden.

Dabei ist jedes Rotorblatt mit sehr vielen Schrauben an der Nabe befestigt. Für die Montage ist es daher notwendig, das Rotorblatt exakt zur Auflagefläche und zum Lochbild auszurichten.

Zu diesem Zweck wird das Rotorblatt gemäß dem Stand der Technik mittels einer Haltevorrichtung an der Hakenflasche eines Kranes befestigt und dann in seine Montageposition gehoben. Derartige Vorrichtungen sind beispielsweise aus der DE 20 2006 015 189 U1, WO 3/100249 A1 und EP 1 925 582 A1 bekannt, wobei die Haltevorrichtungen mittels zusätzlicher Abspannseile mit dem Kran verbunden sein können. Durch die große Angriffsfläche der Rotorblätter haben bereits leichte Windstöße einen großen Einfluss auf die Position des Rotorblatts. Gemäß dem Stand der Technik ist es daher stets notwendig, ein Zeitfenster abzuwarten, in welchem keine unzulässig hohen Windgeschwindigkeiten vorkommen können. Dies ist um so störender, da es ja gerade ein Ziel ist, eine Windkraftanlage in besonders windbeaufschlagten Regionen zu errichten. Dies verursacht häufig einen erheblichen Zeitverlust, was die Montagedauer und somit die Kosten für die teuren Arbeitsmittel erhöht.

Aus der US 4 280 785 A, US 5 865 492 A und US 4 784 565 A sind ebenfalls Manipulatoren zur Positionierung von Objekten relativ zu Kranauslegern bekannt, welche allerdings nicht für die Montage von Rotorblättern einer Windkraftanlage geeignet bzw. optimiert sind.

Aufgabe der vorliegenden Erfindung ist es daher, eine Montageeinrichtung zur Montage von Rotorblättern einer Windkraftanlage zur Verfügung zu stellen, welche die Montagedauer und die Kosten der Montage vermindert.

Diese Aufgabe wird von einer Montageeinrichtung gemäß Anspruch 1 gelöst. Die erfindungsgemäße Montageeinrichtung zur Montage von Rotorblättern einer Windkraftanlage umfasst dabei einen Manipulator mit einer Aufnahmeeinheit zur Aufnahme eines Rotorblattes und einer Verbindungseinheit, über welche der Manipulator momentensteif mit dem Ausleger eines Kranes verbunden oder verbindbar ist. Durch den erfindungsgemäßen Manipulator ist die Position und/oder Ausrichtung eines in der Aufnahmeeinheit aufgenommenen Rotorblatts relativ zum Ausleger des Kranes festlegbar. Diese momentensteife Verbindung zwischen dem Ausleger des Kranes und dem Rotorblatt, welche durch den erfindungsgemäßen Manipulator ermöglicht wird, behebt die Nachteile, welche im Stand der Technik aus der beweglichen Verbindung über das Hubseil resultierte. Mit dem erfindungsgemäßen Manipulator ist es damit möglich, auch bei größeren Windgeschwindigkeiten als im Stand der Technik das Rotorblatt exakt an der Nabe der Windkraftanlage zu positionieren, wodurch sich die Montagedauer und die Kosten der Montage erheblich verringern. Das Rotorblatt ist dabei sicher und spielfrei in der Aufnahmeeinheit aufgenommen und über den Manipulator kippsicher direkt mit dem Kranausleger verbunden, so dass für die zulässigen Windgeschwindigkeiten lediglich die Verwindungssteifigkeit von Kran und Manipulator sowie deren Belastbarkeit einschränkende Faktoren sind.

Vorteilhafterweise weist der Manipulator dabei eine zwischen der Aufnahmeeinheit und der Verbindungseinheit angeordnete Positioniereinheit auf, über welche ein in der Aufnahmeeinheit aufgenommenes Rotorblatt relativ zu dem Ausleger kontrolliert ausgerichtet und/oder positioniert werden kann. Der Manipulator erlaubt es hierdurch, das Rotorblatt kontrolliert auszurichten und/oder zu positionieren. Hierdurch muss die Ausrichtung des Rotorblattes nicht allein durch eine Bewegung des Krans bzw. des Auslegers bewirkt werden, während dennoch die Nachteile einer Verbindung durch das Hubseil vermieden werden.

Vorteilhafterweise ist die Aufnahmeeinheit dabei gegenüber der Verbindungseinheit in unterschiedlichen Positionen festlegbar, was z. B. durch eine entsprechende Ansteuerung von Positionierantrieben der Positioniereinheit oder durch separate Festlegemittel bewirkt werden kann.

Vorteilhafterweise erlaubt die Positioniereinheit eine Ausrichtung und/oder Positionierung der Aufnahmeeinheit mit mindestens zwei, und vorteilhafterweise mit mindestens drei oder vier Freiheitsgraden. Dies ermöglicht eine exakte Ausrichtung und/oder Positionierung eines in der Aufnahmeeinheit aufgenommenen Rotorblatts. Sind weniger als sechs Freiheitsgrade der Bewegung des Manipulators vorgesehen, so können die fehlenden Freiheitsgrade durch eine entsprechende Bewegung des Auslegers bzw. des Kranes zur Verfügung gestellt werden..

Vorteilhafterweise weist die Positioniereinheit des Manipulators dabei mindestens zwei Schwenkeinheiten auf, welche jeweils eine Verschwenkung um eine Schwenkachse erlauben. Dies ermöglicht eine kontrollierte Ausrichtung und/oder Positionierung des Rotorblattes um die jeweiligen Schwenkachsen. Die Schwenkeinheiten können dabei z. B. als Gelenke oder als Drehkränze ausgeführt sein. Weiterhin vorteilhafterweise weist die Positioniereinheit mindestens drei oder vier Schwenkeinheiten auf, welche jeweils eine Verschwenkung um eine Schwenkachse erlauben.

Weiterhin vorteilhafterweise weist die Positioniereinheit einen oder mehrere Positionierantriebe auf. Insbesondere weist die Positioniereinheit vorteilhafterweise für jeden ihrer Freiheitsgrade einen Positionierantrieb auf. Sind Schwenkeinheiten vorgesehen, so weist die Positioniereinheit vorteilhafterweise für jede Schwenkeinheit einen Schwenkantrieb auf. Durch Ansteuerung dieser Positionierantriebe kann die Ausrichtung und/oder Positionierung des in der Aufnahmeeinheit aufgenommenen Rotorblatts vorgenommen werden. Gleichzeitig ermöglichen die Antriebe ein Festsetzen der Aufnahmeeinheit gegenüber der Verbindungseinheit und damit eine momentensteife Verbindung zwischen dem Rotorblatt und dem Ausleger. Als Antriebe können z. B. Elektro- oder Hydraulikmotoren eingesetzt werden, welche über ein Getriebe die Positioniereinheit antreiben, insbesondere die Schwenkeinheiten. Ebenso sind Positionierantriebe in Form von Druckzylindern, insbesondere in Form von hydraulischen oder pneumatischen Zylindern möglich. Hydraulische oder elektrische Motoren werden dabei vorteilhafterweise zum Antrieb von Drehkranzschwenkverbindungen eingesetzt, Druckzylinder dagegen vorteilhafterweise zum Antrieb von Gelenkverbindungen.

Weiterhin vorteilhafterweise weist die Aufnahmeeinheit mindestens einen Aufnahmeantrieb zum Bewegen eines Aufnahmewerkzeuges der Aufnahmeeinheit auf. Hierdurch kann ein Rotorblatt durch das Aufnahmewerkzeug aufgenommen und von dieser wieder freigegeben werden.

Vorteilhafterweise weist die Aufnahmeeinheit dabei mindestens eine und weiterhin vorteilhafterweise zwei nebeneinander angeordnete Aufnahmewerkzeuge auf, über welche das Rotorblatt zangenförmig gegriffen und spielfrei gehalten werden kann. Über die eine oder die mindestens zwei Aufnahmewerkzeuge kann so das Rotorblatt gegriffen und nach der erfolgten Montage wieder freigegeben werden. Vorteilhafterweise sind dabei mindestens zwei Aufnahmewerkzeuge vorgesehen, welche nebeneinander angeordnet sind und deren Bewegungsebenen jeweils parallel ausgerichtet sind. Hierdurch kann das Rotorblatt entlang seiner Längsachse an mindestens zwei Stellen gegriffen werden. Vorteilhafterweise wird das Rotorblatt dabei rechts und links seines Schwerpunktes gegriffen, um die auf den Manipulator wirkenden Drehmomente möglichst gering zu halten.

Vorteilhafterweise ist der erfindungsgemäße Manipulator mit einem Hauptausleger und/oder einer Wippspitze und/oder einer Spitze und/oder einer Hauptauslegerverlängerung des Hauptauslegers direkt und/oder über einen Adapter momentensteif verbindbar. Der Manipulator kann so am Ausleger bzw. der Wippspitze, der Spitze oder der Hauptauslegerverlängerung montiert werden. Die Montage kann dabei entweder direkt an diesen Komponenten, oder über einen hierfür vorgesehenen Adapter erfolgen. Insbesondere ist der Manipulator dabei an den jeweiligen Komponenten verbolzbar.

Vorteilhafterweise erfolgt die Verbindung mit dem Ausleger des Kranes dabei so, dass der Kran weiterhin über das Hubseil Lasten heben kann. Hierdurch wird durch den Manipulator die Kranfunktion des Kranes in keiner Weise beeinträchtigt.

Die vorliegende Erfindung umfasst weiterhin die Verwendung eines erfindungsgemäßen Manipulators an einem Kran, insbesondere an einem Teleskop- oder Gittermastkran, zur Montage von Rotorblättern einer Windkraftanlage. Ein solcher Kran weist dabei vorteilhafterweise einen um eine horizontale Wippachse aufwippbaren Ausleger auf, über welchen das Hubseil geführt ist, wobei der Manipulator momentensteif mit diesem Ausleger des Kranes verbunden wird.

Die vorliegende Erfindung umfasst weiterhin einen Kran, insbesondere einen Teleskop- oder Gittermastkran, mit einem um eine horizontale Wippachse aufwippbaren Ausleger und mit einem Manipulator zur Montage von Rotorblättern einer Windkraftanlage, wie er oben dargestellt wurde, wobei die Verbindungseinheit des Manipulators momentensteif direkt und/oder über einen Adapter mit dem Ausleger des Kranes verbunden ist. Hierdurch ergeben sich offensichtlich die gleichen Vorteile, wie sie bereits oben bezüglich des Manipulators dargestellt wurden. Der aufwippbare Ausleger des Kranes ist dabei vorteilhafterweise an einem Oberwagen des Kranes angeordnet, welcher um eine vertikale Drehachse gegenüber einem Unterwagen verschwenkbar ist. Weiterhin ist eine Hubwinde vorgesehen, über welche das über den Ausleger geführte Hubseil bewegt. Der Unterwagen weist vorteilhafterweise ein Fahrwerk auf, über welchen der Kran verfahrbar ist. Insbesondere handelt es sich bei dem erfindungsgemäßen Kran dabei vorteilhafterweise um einen Mobilkran mit mehreren bereiften Achsen, welcher hierdurch auch auf normalen Straßen verfahrbar ist. Ebenso kann es sich bei dem erfindungsgemäßen Kran um einen Raupenkran handeln.

Vorteilhafterweise weist der Kran eine Kransteuerung auf, welche die Bewegungen des Manipulators überwacht und/oder ansteuert. Hierdurch wird die Überwachung und/oder Ansteuerung des Manipulators über die ohnehin vorhandene Kransteuerung des Kranes ermöglicht, welche hierfür entsprechend adaptiert wird. Die Ansteuerung des Manipulators erfolgt dabei über Bedienelemente im oder am Kran. Z. B. kann die Ansteuerung des Manipulators von der Krankabine aus erfolgen. Alternativ oder zusätzlich kann vorgesehen sein, dass die Ansteuerung des Manipulators über eine Fernsteuerung erfolgt. Hierdurch kann eine Ausrichtung und/oder Positionierung des Rotorblattes z.B. vom Monteur auf der Windkraftanlage selbst vorgenommen werden.

Die vorliegende Erfindung umfasst weiterhin ein Verfahren zur Montage eines Rotorblatts an einer Nabe einer Windkraftanlage, mit den Schritten: Bereitstellen eines Kranes mit einem am Ausleger momentensteif angeordneten Manipulator, Aufnahme eines Rotorblatts im Manipulator, Positionieren und Ausrichten des Rotorblatts bezüglich der Montagestelle an der Nabe über den Manipulator und/oder den Kran, Montieren des Rotorblatts an der Nabe. In vorteilhafter Weise wird das Rotorblatt dabei über eine Positioniereinheit des Manipulators ausgerichtet und/oder positioniert. Weiterhin vorteilhafterweise wird das Rotorblatt dabei über mindestens zwei nebeneinander angeordnete Aufnahmewerkzeuge der Aufnahmeeinheit des Manipulators aufgenommen, welche entlang der Längsachse des Rotorblatts auf beiden Seiten des Schwerpunkts des Rotorblatts angreifen. Hierdurch vermindern sich die Drehmomentbelastungen, welche auf den Manipulator wirken. Weiterhin vorteilhafterweise wird die Bewegung des Manipulators dabei über die Kransteuerung überwacht und/oder gesteuert. Die Steuerung des Manipulators kann dabei über Bedienelemente im oder am Kran oder über eine Fernsteuerung erfolgen. Das erfindungsgemäße Verfahren erfolgt dabei vorteilhafterweise mit einem Manipulator oder einem Kran, wie sie oben dargestellt wurden.

Die vorliegende Erfindung wird nun anhand von Ausführungsbeispielen sowie Zeichnungen näher beschrieben. Dabei zeigen:
- Figur 1:: ein erstes Ausführungsbeispiel eines erfindungsgemäßen Manipulators in einer perspektivischen Ansicht,
- Figur 2:: das erste Ausführungsbeispiel des erfindungsgemäßen Manipulators in einer Draufsicht,
- Figur 3:: eine alternative Ausführung einer Aufnahmevorrichtung eines erfindungsgemäßen Manipulators,
- Figur 4:: ein zweites Ausführungsbeispiel eines erfindungsgemäßen Manipulators, welcher auf einem Kran montiert ist, in einer Seitenansicht,
- Figur 5a, b:: zwei weitere alternative Ausführungen der Aufnahmevorrichtung eines erfindungsgemäßen Manipulators,
- Figur 5c:: ein drittes Ausführungsbeispiel eines erfindungsgemäßen Manipulators, welches auf dem Ausleger eines Kranes montiert ist, in einer Seitenansicht
- Figur 5d:: das dritte Ausführungsbeispiel in einer Draufsicht,

- Figur 6:: die Gewichtsverhältnisse beim Aufnehmen eines Rotorblatts durch einen erfindungsgemäßen Manipulator,
- Figur 7a:: ein viertes Ausführungsbeispiel eines erfindungsgemäßen Manipulators, welcher auf einem Ausleger eines Kranes montiert ist, in einer Seitenansicht und
- Figur 7b:: das vierte Ausführungsbeispiel in einer Draufsicht.

In den Figuren sind mehrere Ausführungsbeispiele eines erfindungsgemäßen Manipulators 1 dargestellt, welche ein Rotorblatt 200 sicher aufnehmen und zusätzlich in alle Richtungen bewegen können. Der Manipulator 1 wird dabei an einem Kranausleger direkt angebracht, so dass die Beweglichkeit, die aus der Verbindung über ein Hubseil resultiert, ausgeschlossen wird. Hierfür weist der Manipulator eine Aufnahmeeinheit zur Aufnahme des Rotorblatts 200 und eine Verbindungseinheit auf, über welche er momentensteif mit dem Ausleger verbunden werden kann.

Alle Ausführungsbeispiele weisen dabei eine Aufnahmeeinheit mit zwei Aufnahmewerkzeugen 2 auf, über welche ein Rotorblatt sicher und spielfrei aufgenommen werden kann. Hierzu sind jeweils Antriebe 3 vorgesehen, mit welchen zangenförmige Greifelemente 4 der Aufnahmewerkzeuge an das Rotorblatt angelegt werden. Die Aufnahmeeinheit kann das Rotorblatt hierdurch sicher und spielfrei aufnehmen und nach der Montage wieder freigeben. Durch die momentensteife Verbindung des Manipulators mit dem Ausleger ist die Position und Ausrichtung des Rotorblatts relativ zu dem Ausleger durch den Manipulator festgelegt. Hierdurch haben am Rotorblatt angreifende Windkräfte keinen Einfluß mehr auf die Position des Rotorblatts, so dass die Montage auch bei wesentlich höheren Windgeschwindigkeiten möglich ist als im Stand der Technik.

Weiterhin ist zwischen der Aufnahmeeinheit 2 und der Verbindungseinheit eine Positioniereinheit vorgesehen, über welche das Rotorblatt relativ zum Ausleger kontrolliert ausgerichtet und positioniert werden kann. Die Positioniereinheit weist dabei mehrere Schwenkeinheiten auf, welche jeweils eine Verschwenkung um eine Schwenkachse erlauben, wofür entsprechende Verschwenkantriebe vorgesehen sind.

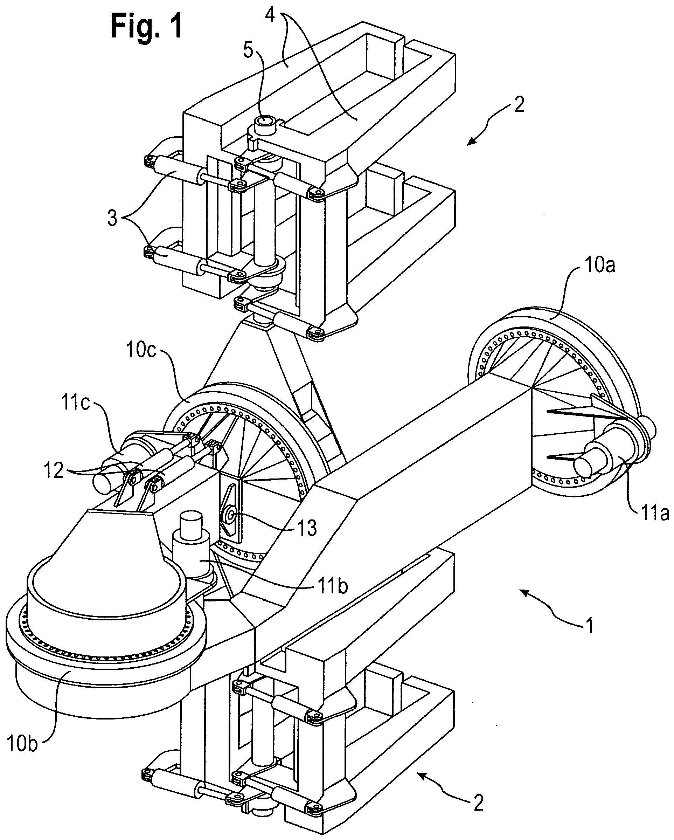

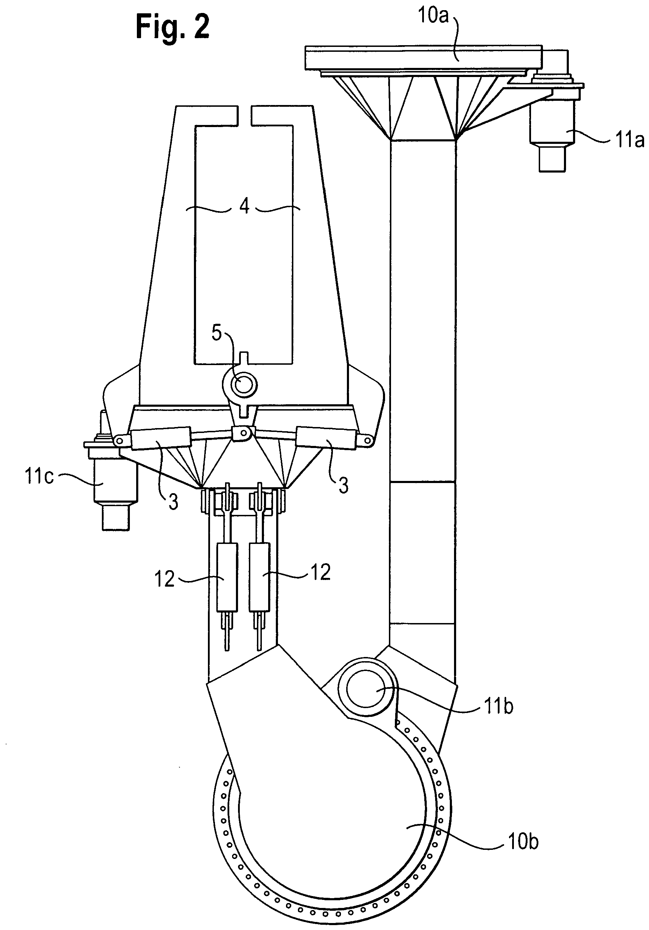

Bei dem in Figur 1 und 2 gezeigten Ausführungsbeispiel weist die Positioniereinheit dabei drei Verschwenkeinheiten 10a bis 10c auf, welche jeweils über Drehkränze ausgeführt sind und über Motoren 11a - 11c angetrieben werden. Die Schwenkeinheit 10a verbindet dabei die nicht gezeigte Verbindungseinheit mit einem ersten Arm, dessen Längsachse sich im wesentlichen entlang der Drehachse der Verschwenkeinheit 10a erstreckt. An seinem anderen Ende weist dieser erste Arm die zweite Verschwenkeinheit 10b auf, deren Drehachse senkrecht zur Drehachse der ersten Verschwenkeinheit 10a ausgerichtet ist. Die zweite Verschwenkeinheit 10b verbindet den ersten Arm mit einem zweiten Arm, welcher über ein Gelenk 13 mit einem dritten, kurz ausgeführten Arm in Verbindung steht. Die Gelenkachse des Gelenkes 13 verläuft dabei in einer Ebene senkrecht zur Drehachse der zweiten Verschwenkeinheit 10b. Zum Verschwenken des dritten Arms gegenüber dem zweiten Arm um die Gelenkachse des Gelenkes 13 sind dabei zwei Hydraulikzylinder 12 vorgesehen. Der dritte, sehr kurz ausgeführte Arm trägt die dritte Verschwenkeinheit 10c, an welcher die Aufnahmeeinheit angeordnet ist. Die Aufnahmeeinheit weist dabei zwei zangenförmige Aufnahmewerkzeuge 2 auf, welche mit einem gewissen Abstand nebeneinander so angeordnet sind, dass sie ein Rotorblatt entlang dessen Längsachse an zwei voneinander entfernt angeordneten Stellen greifen können. Die zangenförmigen Aufnahmewerkzeuge 2 können geöffnet und geschlossen werden, indem die Greifelemente 4 über Antriebe in Form von Hydraulikzylindern 3 um die Schwenkachse 5 geschwenkt werden. Die Schenkachse 5 steht dabei senkrecht auf der Drehachse der dritten Verschwenkeinheit 11c.

Der Manipulator erlaubt damit eine Bewegung der Aufnahmeeinheit in Bezug auf die Verbindungseinheit mit vier Freiheitsgraden um die Schwenkachsen der drei Verschwenkeinheiten 10a - 10c in Form von Drehkränzen und der vierten Verschwenkeinheit in Form des Gelenks 13. Hierdurch ist eine exakte Positionierung und Ausrichtung des Rotorblatts an der Nabe der Windkraftanlage möglich.

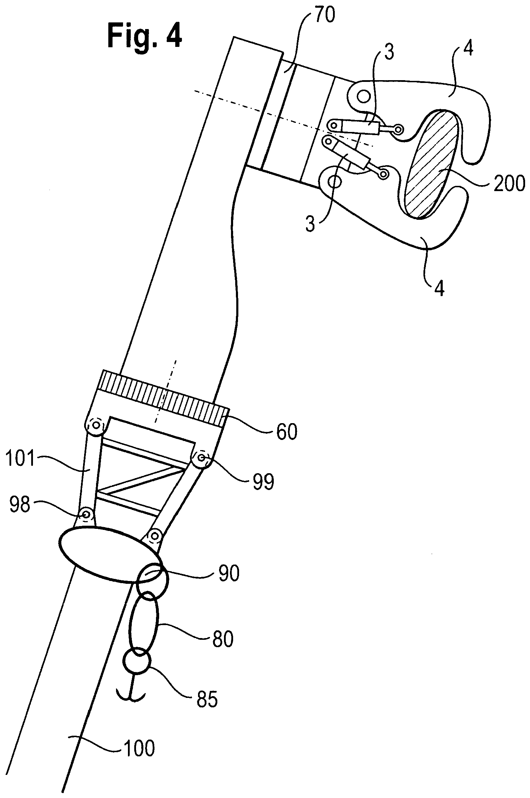

In Figur 4 ist ein zweites Ausführungsbeispiel eines erfindungsgemäßen Manipulators gezeigt, welcher an einem Ausleger 100 eines Teleskopkranes angeordnet ist. Der Manipulator ist dabei am Rollenkopf 90 des Auslegers so montiert, dass das Hubseil im Rollenkopf eingeschert bleiben kann. Hierdurch ist auch mit montiertem Manipulator ein vollwertiger Kranbetrieb möglich. Das Hubseil 80, welches im Rollenkopf 90 eingeschert ist, trägt dabei ein Kranhaken 85. Die Montage des Manipulators erfolgt dabei am Rollenkopf über Verbolzungen 98, an welchen üblicherweise eine Gitterspitze montiert werden kann. Hierfür ist ein Adapter 101 vorgesehen, welcher an den Verbolzungen 98 mit dem Rollenkopf 90 verbunden ist. Am Adapter 101 ist der Manipulator über Verbolzungen 99 montiert ist. Der Manipulator in Figur 4 weist dabei zwei Drehkränze 60 und 70 auf, deren Drehachsen senkrecht zueinander stehen. Die Drehachse des ersten Drehkranzes ist dabei im wesentlichen parallel zur Längsachse des Auslegers 100 angeordnet, während die Drehachse des zweiten Drehkranzes 70 in einer Ebene verläuft, welche senkrecht auf der Drehachse des ersten Drehkranzes 60 steht. Damit sind zum Ausrichten und Positionierens des Flügels 200 lediglich zwei Freiheitsgrade über den Manipulator gegeben, während die übrige Ausrichtung über den Kran erfolgt.

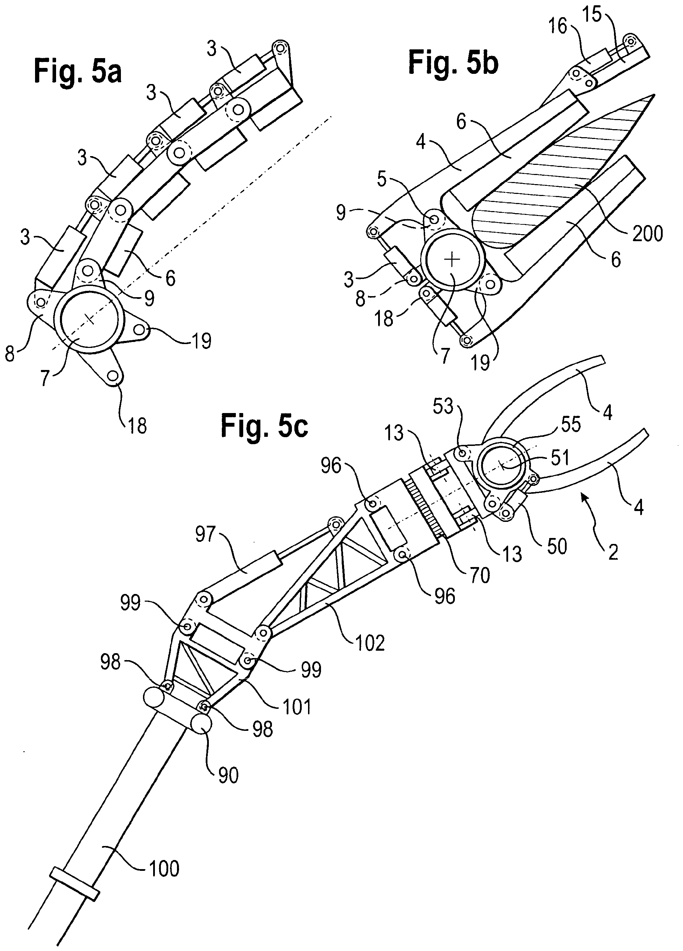

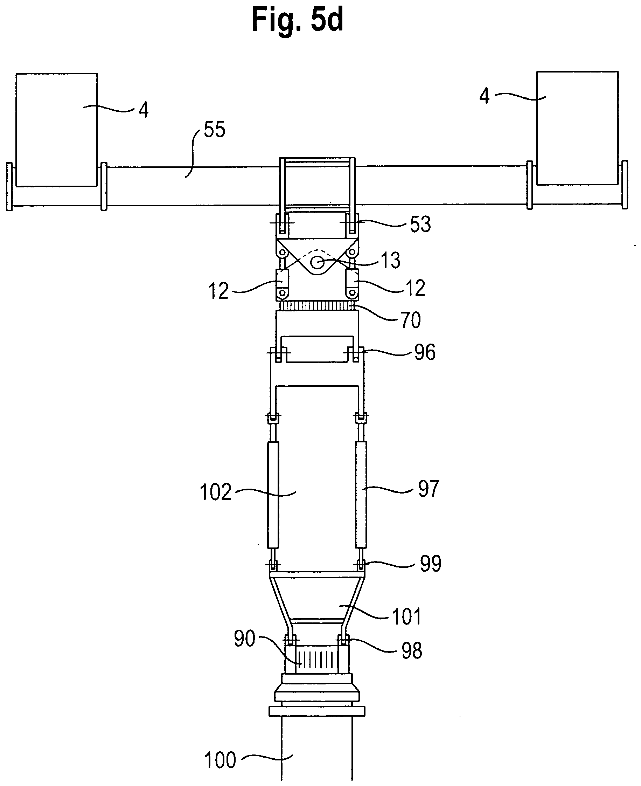

In den Figuren 5c und 5d ist ein drittes Ausführungsbeispiel eines erfindungsgemäßen Manipulators gezeigt. Die Aufnahmeeinheit mit den Aufnahmewerkzeugen 4, welche an dem Längselement 55 angeordnet sind, ist dabei um die Drehachse 51 des Längselements schwenkbar, wofür der Hydraulikzylinder 50 vorgesehen ist. Dies ermöglicht es, das Rotorblatt, welches entlang seiner Längsachse an zwei Stellen durch die Aufnahmewerkzeuge aufgenommen wird, um die parallel zur Längsachse des Rotorblatts verlaufende Drehachse 51 zu verschwenken. Die Positioniervorrichtung des Manipulators weist weiterhin einen Drehkranz 70 sowie ein Kippgelenk 13 auf, welches über Hydraulikzylinder angetrieben wird. An dem Kippgelenk 13 ist das Aufnahmewerkzeug an Verbolzungsstellen 53 montiert, während der Manipulator über Verbolzungsstellen 96 am Kran verbolzt ist.

Dabei ist der in Fig. 5c und d gezeigte Manipulator an einer Wippspitze 102 des Kranes montiert. Die Wippspitze ist dabei am Teleskopausleger 100 montiert, wozu ein Adapter 101 eingesetzt ist, welcher am Rollenkopf 90 über die Verbolzungsstellen 98 montiert ist. Die Wippspitze 102 kann dabei über die Hydraulikzylinder 97 in der Wippebene verschwenkt werden und ermöglicht so einen weiteren Freiheitsgrad zur Positionierung und Ausrichtung des Rotorblatts.

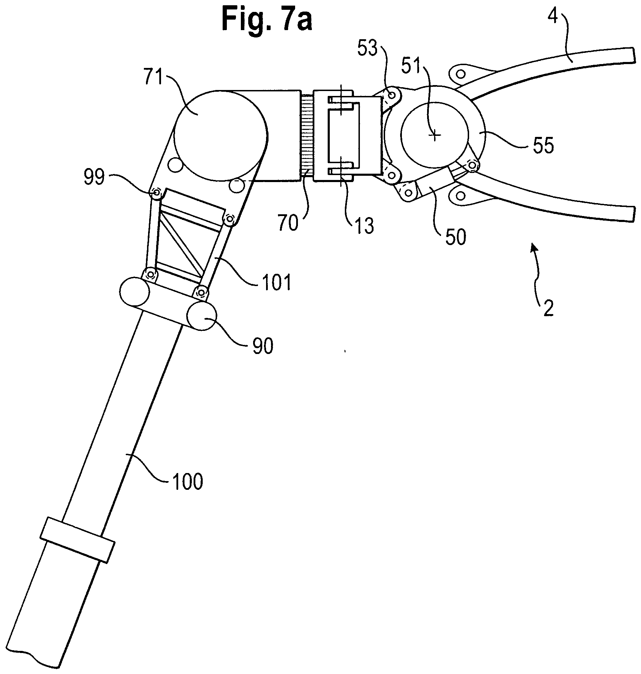

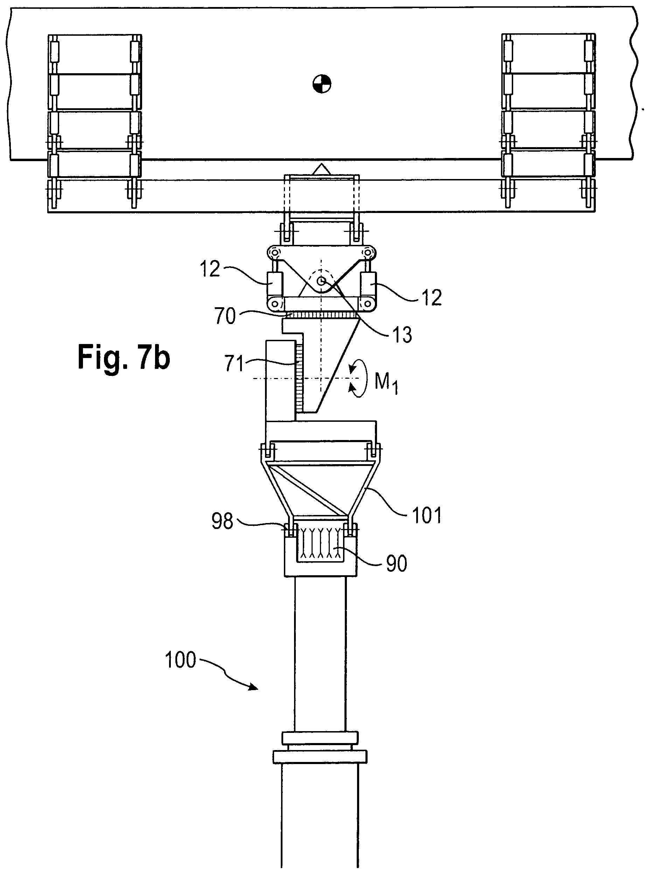

In Figuren 7a und 7b ist ein viertes Ausführungsbeispiel des erfindungsgemäßen Manipulators gezeigt, welcher zwei Drehkränze 70 und 71 sowie ein Kippgelenk 13 aufweist. Die beiden Drehkränze 70 und 71 weisen wiederum Drehachsen auf, welche senkrecht aufeinander stehen. Dabei verläuft die Drehachse des ersten, kranseitig angeordneten Drehkranzes 71 in einer Ebene senkrecht zur Längsachse des Auslegers 100, während die Drehachse des zweiten Drehkranzes 70 in einer Ebene verläuft, welche senkrecht auf der Drehachse des ersten Drehkranzes steht. Die Drehkränze sind dabei jeweils über Drehantriebe bewegbar. Das Kippgelenk 13 ist über Hydraulikzylinder 12 verkippbar. Die Beweglichkeit des Kippgelenks 13 beträgt dabei in beide Bewegungsrichtungen jeweils ca. 45°. Der zweite Drehkranz erlaubt eine Drehung um 360°, der erste Drehkranz 71 dagegen lediglich eine Bewegung in beide Richtungen um ca. 120°.

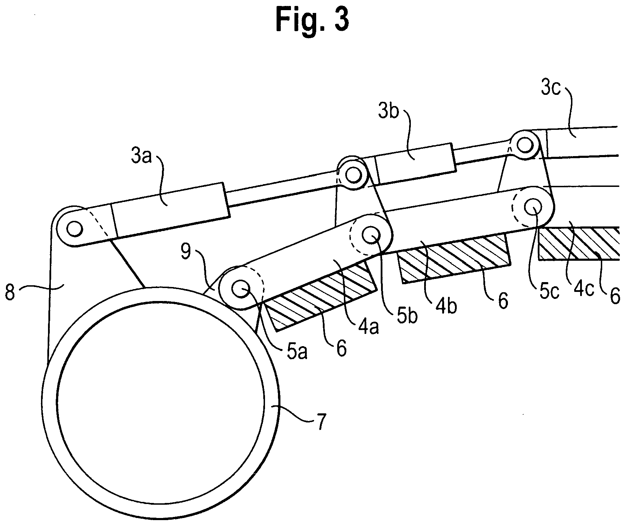

Bei den erfindungsgemäßen Manipulatoren erfolgt die Aufnahme des Rotorblatts über Aufnahmewerkzeuge, mit denen das Rotorblatt gegriffen und wieder frei gegeben werden kann. In Figur 3 ist dabei eine alternative Ausführung der Aufnahmewerkzeuge 2 gezeigt. Die Figur 3 zeigt dabei nur einen der beiden zangenförmigen Greifarme in einer seitlichen Ansicht. Dabei sind mehrere Glieder 4a, 4b und 4c vorgesehen, welche gelenkig miteinander verbunden sind und über Hydraulikzylinder 3a - 3c gegeneinander verschwenkbar sind. Das erste Glied 4a ist dabei über ein Gelenk 5a an einer Lasche 9 der Achse 7 angeordnet. Am ersten Glied 4a greift dabei ein erster Zylinder 3a an, welcher an einer weiteren Lasche 8 an der Achse 7 angelenkt ist und so das erste Glied um die Gelenkachse 5a verschwenkt. Am ersten Glied 4a ist das zweite Glied 4b über das Gelenk 5b angelenkt, wobei die Verschwenkung zwischen dem ersten und dem zweiten Glied über einen zweiten Zylinder 3b erfolgt, welcher an den beiden Gliedern angelenkt ist. In gleicher Art ist das dritte Glied 4c über das Gelenk 5c am zweiten Glied angelenkt und kann über den dritten Hydraulikzylinder 3c bewegt werden. Eine vergleichbare Anordnung mit insgesamt vier Gliedern ist dabei in Figur 5a gezeigt. Dabei ist jeweils nur ein Zangenarm gezeigt, für eine vollständige Aufnahme ist selbstverständlich ein weiterer, vorteilhafterweise symmetrisch ausgeführter Greifarm notwendig. Bei der in Figur 5a gezeigten Variante sind dabei bereits die Laschen 18 und 19 an der Achse 7 gezeigt, an welchen dieser zweite Greifarm angelenkt wird. Eine solche Lösung ist auch in Fig. 7b gezeigt.

Zur Schonung des Rotorblatts können dabei Dämpfungsstücke 6 an den Aufnahmewerkzeugen vorgesehen sein, wobei in Figuren 3 und 5a jedes der Zangenglieder ein solches Dämpfungsstück 6 trägt. Dabei kann es sich um ein elastisch verformbares Material handeln. Ebenso wären als Dämpfungsstücke Luftkissen möglich. Gegebenenfalls kann vorgesehen sein, dass dies auch gleichzeitig die Antriebsfunktion übernimmt.

Eine weitere alternative Ausführung eines Aufnahmewerkzeugs ist in Figur 5b gezeigt, bei welchem zwei Greifarme 4 zum Einsatz kommen, welche an den Laschen 9 und 19 angelenkt sind. Die Greifarme 4 sind dabei über den Anlenkpunkt 5 hinaus nach hinten verlängert, wobei an diesen Verlängerungen Hydraulikzylinder 3 angreifen, die an den Laschen 8 und 18 an der Achse 7 angelenkt sind. Die Bewegung der Greifarme 4 erfolgt damit hebelartig über die Hydraulikzylinder 3. Die Greifarme 4 weisen auf ihrer Innenseite wiederum Dämpfungsstücke 6 auf. Weiterhin ist an zumindest einem Greifarm ein vorderes Schwenkglied 15 verschwenkbar angelenkt, welches über einen Hydraulikzylinder 16 verschwenkt und hierdurch an das Rotorblatt 200 angelegt werden kann.

In Figur 5c ist eine weitere alternative Ausführung der Aufnahmewerkzeuge gezeigt, welche wiederum zwei gegeneinander bewegbare Greifarme 4 aufweist. Eine weitere Ausführung einer Aufnahmewerkzeug ist in Figur 4 gezeigt, bei welcher die beiden einzeln angelenkten Greifarme 4 über innen angeordnete Hydraulikzylinder 3 bewegbar sind. Dabei sind die Innenflächen der Greifarme stark gekrümmt, um das Rotorblatt 200 jeweils an seinen Kanten greifen zu können. In allen andern Ausführungsformen sind die Innenflächen der Greifarme dagegen nur leicht gekrümmt, so dass das Rotorblatt an seinen Rotorflächen gegriffen werden kann.

Mit dem erfindungsgemäßen Verfahren zur Montage des Rotorblatts an der Nabe einer Windkraftanlage ist vorgesehen, den Flügel zunächst grob über die Bewegung des Krans in seine Montageposition zu bringen. Dies kann über Wippen und Teleskopieren des Teleskopauslegers 100 erfolgen. Die Feinausrichtung erfolgt dann mittels des Manipulators. Dies kann über die verschiedenen Drehkränze und die zugehörigen Antriebe erfolgen, welche die Position der Aufnahmewerkzeuge gegenüber dem Ausleger des Krans entsprechend verändern. Neben Drehkränzen oder alternativ hierzu kann an mindestens einer Stelle auch eine Kippbewegung, z. B. angetrieben von Hydraulikzylindern, um eine Schwenkachse erfolgen. Figur 5c zeigt dabei eine weitere Möglichkeit, die Position des Flügels zu verändern. Hierzu ist der Zylinder 50 vorgesehen, der die Aufnahmeeinheit mit dem Flügel um eine zur Längsachse des Flügels parallele Achse 51 schwenken kann.

Alternativ zu den gezeigten Ausführungsbeispielen mit Drehantrieben können dabei sämtliche Antriebe auch von Linearantrieben übernommen werden.

Der Manipulator kann dabei eine Bewegung mit einem oder mehreren Freiheitsgraden vollführen. Die Ausführungsbeispiele zeigen dabei Manipulatoren mit zwei, drei und vier Freiheitsgraden, wobei die Bewegung jeweils Schwenkbewegungen um entsprechende Schwenkachsen sind. Ein Manipulator mit vier oder mehr Achsen kann dabei die vollständige Feinausrichtung des Flügels übernehmen. Ebenso kann jedoch vorgesehen sein, dass ein Teil der Feinausrichtung von dem Manipulator und ein anderer Teil vom Kranoberwagen oder vom Ausleger ausgeführt wird. Letzteres kann über Drehen des Oberwagens, Teleskopieren des Auslegers, Wippen des Auslegers oder Wippen einer Wippspitze, an welcher der Manipulator angebracht wurde, erfolgen. Dabei ist zu beachten, dass der Flügel gewichtsoptimiert ist, so dass ein Verbolzen der Teleskopschüsse untereinander nicht erforderlich ist. Der Teleskopzylinder kann die Last aufnehmen. Hierdurch ist eine Feinausrichtung durch Austeleskopieren des Auslegers möglich.

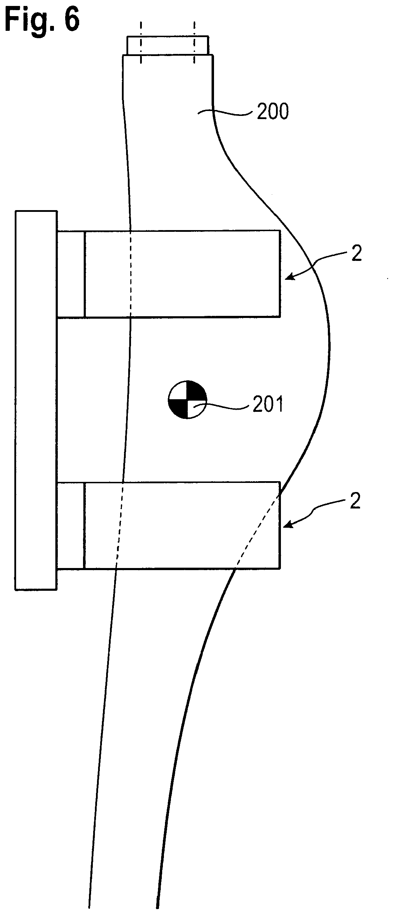

In Figuren 5d und 7b ist jeweils zu erkennen, dass die beiden Aufnahmewerkzeugen 4 entlang eines Längselements 55 in einem gewissen Abstand voneinander angeordnet sind, so dass das Rotorblatt an zwei unterschiedlichen Positionen entlang seiner Längsachse gegriffen wird. Um unnötige Momente auf den Manipulator zu vermeiden, wird das Rotorblatt dabei so aufgenommen, dass der Schwerpunkt 201 des Rotorblatts zwischen den beiden Aufnahmewerkzeugen 4 liegt. Dies ist nochmals in Figur 6 dargestellt.

Der Manipulator kann, wie in den Ausführungsbeispielen gezeigt, am Hauptausleger entweder direkt oder über ein entsprechendes Adapterstück angebracht sein. Wie ebenfalls in den Ausführungsbeispielen gezeigt, kann der Manipulator auch an einer Wippspitze, oder alternativ hierzu an einer Spitze oder Hauptauslegerverlängerung angebracht werden.

Bei dem erfindungsgemäßen Kran handelt es sich vorteilhafterweise um einen Mobilkran mit einem Teleskopausleger, an welchem der Manipulator momentensteif montiert ist. Die Montage erfolgt dabei vorteilhafterweise so, dass die Kranfunktionen nicht beeinträchtigt werden. Bei dem Verfahren zur Montage eines Rotorblatts werden dabei sämtliche Tätigkeiten von der Kransteuerung überwacht. Insbesondere erfolgt dabei die Überwachung und Steuerung des Manipulators über die Kransteuerung. Hierfür kann die Steuerung des Manipulators über Steuerelemente im oder am Kran erfolgen, z. B. von der Krankabine aus. Ebenso ist eine Fernsteuerung des Manipulators möglich.

Durch den erfindungsgemäßen Manipulator ist es möglich, Rotorblätter z. B. mit Hilfe eines Teleskopkranes auch bei Windstärken zu montieren, welche für eine Montage mit einem am Lastseil hängenden Rotorblatt nicht mehr geeignet wären, da die Aufnahme der Rotorblätter durch den Propellermanipulator schon am Boden auf dem Transportmittel erfolgt. Zur Aufnahme wird also kein Hakenbetrieb erforderlich sein, da der Teleskopierzylinder geeignet ist, um den Teleskopausleger und den Propellermanipulator mit dem Rotorblatter zusammen auszuschieben. Hierdurch kann die Dauer der Montage und damit auch deren Kosten erheblich verringert werden.

## Patentansprüche

1. Montageeinrichtung von Rotorblättern einer Windkraftanlage, umfassend:
- einen Kran, welcher ein Hubseil enthält
- einen Manipulator (1) mit einer Aufnahmeeinheit zur Aufnahme eines Rotorblattes (200) und mit einer Verbindungseinheit, über welche der Manipulator momentensteif mit dem Ausleger des Kranes verbunden ist, und mit einer zwischen der Aufnahmeeinheit und der Verbindungseinheit angeordneten Positioniereinheit, über welche ein in der Aufnahmeeinheit aufgenommenes Rotorblatt relativ zu dem Ausleger kontrolliert ausgerichtet und/oder positioniert werden kann.

2. Montageeinrichtung nach Anspruch 1 wobei die Positioniereinheit eine Ausrichtung und/oder Positionierung der Aufnahmeeinheit mit mindestens zwei, und vorteilhafterweise mit mindestens drei oder vier Freiheitsgraden erlaubt.

3. Montageeinrichtung nach Anspruch 2 wobei die Positioniereinheit mindestens zwei Schwenkeinheiten aufweist, welche jeweils eine Verschwenkung um eine Schwenkachse erlauben.

4. Montageeinrichtung nach einem der Ansprüche 1 bis 3 wobei die Positioniereinheit einen oder mehrere Positionierantriebe aufweist.

5. Montageeinrichtung nach einem der vorangegangenen Ansprüche, wobei die Aufnahmeeinheit mindestens einen Aufnahmeantrieb (3) zum Bewegen eines Aufnahmewerkzeuges (2) aufweist.

6. Montageeinrichtung nach einem der vorangegangenen Ansprüche, wobei die Aufnahmeeinheit mindestens eine und vorteilhafterweise zwei nebeneinander angeordnete Aufnahmewerkzeuge (2) aufweist, über welche das Rotorblatt (200) zangenförmig gegriffen und spielfrei gehalten werden kann.

7. Montageeinrichtung nach einem der vorangegangenen Ansprüche, welcher mit einem Hauptausleger und/oder einer Wippspitze und/oder einer Spitze und/oder einer Hauptauslegerverlängerung des Hauptauslegers direkt und/oder über einen Adapter momentensteif verbindbar ist.

8. Montageeinrichtung nach einem der vorangegangenen Ansprüche, wobei die Verbindung mit dem Ausleger (100) des Kranes so erfolgt, dass der Kran weiterhin über das Hubseil Lasten heben kann.

## Claims

1. An assembly device for rotor blades of a wind power installation, comprising:
- a crane including a hoist rope
- a manipulator (1) having a receiving unit for the receiving of a rotor blade (200) and having a connection unit via which the manipulator is connected to the boom of a crane in a torque-rigid manner, and having a positioning unit which is arranged between the receiving unit and the connection unit and via which a rotor blade received in the receiving unit can be aligned and/or positioned in a controlled manner relative to the boom.

2. An assembly device in accordance with claim 1, wherein the positioning unit allows an alignment and/or positioning of the receiving unit with at least two degrees of freedom and advantageously with at least three or four degrees of freedom.

3. An assembly device in accordance with claim 2, wherein the positioning unit has at least two pivot units which each allow a pivoting about a pivot axis.

4. An assembly device in accordance with one of the claims 1 to 3, wherein the positioning unit has one or a plurality of positioning drives.

5. An assembly device in accordance with one of the preceding claims, wherein the receiving unit has at least one receiving drive (3) for the movement of a receiving tool (2).

6. An assembly device in accordance with one of the preceding claims, wherein the receiving unit has at least one receiving tool (2) and advantageously two receiving tools (2) arranged next to one another via which the rotor blade (200) can be gripped in the manner of pliers and can be held free of play.

7. An assembly device in accordance with one of the preceding claims which can be connected to a main boom and/or a luffing fly jib and/or a tip and/or a main boom extension of the main boom directly and/or via an adapter in a torque-rigid manner.

8. An assembly device in accordance with one of the preceding claims, wherein the connection to the boom (100) of the crane takes place so that the crane can continue to lift loads via the hoist rope.

## Revendications

1. Dispositif de montage de pales de rotor d'une éolienne, comprenant :
- une grue, qui comporte un câble de levage
- un manipulateur (1) doté d'une unité de réception pour recevoir une pale de rotor (200) et d'une unité de liaison, par le biais de laquelle le manipulateur est relié rigide en couple à la flèche de la grue, et doté d'une unité de positionnement disposée entre l'unité de réception et l'unité de liaison, ladite unité de positionnement permettant d'orienter et/ou de positionner de manière contrôlée par rapport à la flèche une pale de rotor reçue dans l'unité de réception.

2. Dispositif de montage selon la revendication 1, dans lequel l'unité de positionnement permet une orientation et/ou un positionnement de l'unité de réception avec au moins deux, et de manière avantageuse avec au moins trois ou quatre degrés de liberté.

3. Dispositif de montage selon la revendication 2, dans lequel l'unité de positionnement comporte au moins deux unités de pivotement, qui permettent respectivement un pivotement sur un axe de pivotement.

4. Dispositif de montage selon l'une des revendications 1 à 3, dans lequel l'unité de positionnement comporte un ou plusieurs entraînements de positionnement.

5. Dispositif de montage selon l'une des revendications précédentes, dans lequel l'unité de réception comporte au moins un entraînement de réception (3) destiné au déplacement d'un outil de réception (2).

6. Dispositif de montage selon l'une des revendications précédentes, dans lequel l'unité de réception comporte au moins un et de manière avantageuse deux outils de réception (2) disposés l'un à côté de l'autre, par le biais desquels la pale de rotor (200) peut être saisie à la manière d'une pince et maintenue sans jeu.

7. Dispositif de montage selon l'une des revendications précédentes, qui peut être relié rigide en couple à une flèche principale et/ou une flèche relevable et/ou une pointe et/ou une extension de flèche principale de la flèche principale directement et/ou par le biais d'un adaptateur.

8. Dispositif de montage selon l'une des revendications précédentes, dans lequel la liaison avec la flèche (100) de la grue se fait de telle sorte que la grue peut encore lever des charges par le biais du câble de levage.
